# EUROPEAN PATENT SPECIFICATION

(11) **EP 3 769 942 B1**
(45) Date of publication and mention of the grant of the patent: **15.10.2025**
(21) Application number: 20187299.1
(22) Date of filing: 23.07.2020
(51) Int. Cl.: B29C 67/20, B29C 44/44, B29C 67/24, B29C 70/02, A42B 3/12, C08J 9/232

(54) **COMPOSITE MATERIAL FOR HOT-MOLDING**
VERBUNDMATERIAL ZUM HEISSFORMEN
MATÉRIAU COMPOSITE POUR MOULAGE À CHAUD

(30) Priority: 26.07.2019 IT 201900013098
(43) Date of publication of application: 27.01.2021
(73) Proprietor: Giorgia, Daniel, 31050 Vedelago (TV) (IT)
(72) Inventor: Giorgia, Daniel, 31050 Vedelago (TV) (IT)
(74) Representative: Citron, Massimiliano

(56) References cited:
- EP-A1- 0 711 815
- EP-A1- 2 611 860
- EP-A1- 2 918 647
- EP-A1- 3 375 599
- EP-B1- 2 611 860
- US-A- 4 492 725

## Description

The invention refers to a composite material for hot molding. In particular, the material can be exploited to mold paddings, e.g. of helmets, or generally cushions to absorb shocks, or internal spindles or cores of carbon-coated objects.

E.g. from WO2012140473 or EP0585965, a composite material is known which, due to the fact that it contains hollow synthetic microspheres, can be used advantageously for many applications. EP0585965 exploits it to lighten the final product, while WO2012140473 uses its expanding properties during the molding to better copy the mold cavity.

EP 3 375 599 A1 discloses a formulation for the composite material with a base material + additive material. EP 2 611 860 A1 discloses a pre-expanded polyolefin particle.

Other convenient applications include the production of paddings for helmets and the molding of carbon with an internal expanding core formed with said material. These applications can be improved.

For the helmets, the molded material can end up being fragile so that it can fracture following an impact, and after molding it can deform if subjected to temperatures above 70°C, mainly because of its propensity to water absorption and the consequent release of steam (which makes it swell during or after the firing) and deformation due to the expansion of residual free gases present inside the system.

When used for molding carbon, the material behaves in the same way (fragile and fracturable, deformable over 70°C, etc.). In addition there is the problem that the material during the hardening (*curing*) or coating of the carbon tends to create surface defects by releasing water vapor or gas trapped in its volume. This trapped gas can deform the artifact even after molding, e.g. if it expands due to high temperatures. This problem also holds for helmets.

Therefore a material of the above type without these problems is missing in the art.

The main object of the invention is then to propose a material of the aforesaid type that no longer has - or mitigates - these disadvantageous characteristics.

The composite material according to the invention is composed of a base material and an additive material, which allows eliminating completely or almost completely the limits and problems described in the introduction.

The base material to be molded is composed by weight of 5 to 50% of expanded particles and 50 to 95% of unexpanded particles, the particles being in plastic material, of closed shape, hollow and filled with gas.

These values guarantee advantageous performance and weight suitable for the applications. The expanded particles are essential for the invention, and act as a binder or filler for the other spheres. Expanded microspheres are the filling element (filler), unexpanded microspheres act as a binder.

The particles generally have a spherical shape and are very small (10-40 µm in diameter). Note, however, that size is not essential.

The additive material is activated carbon.

Chemically any type of activated carbon is usable in the invention, preferably in the form of powder or granules.

Activated carbon has proven to be very advantageous. As it has the ability to absorb surrounding gas, its presence in the material allows it to permanently capture gas molecules without them returning free, even if the material is subjected to high temperatures. Then, the activated carbon has the effect of trapping in the volume of the composite material gas present at the time of mixing and/or gas resulting from the breaking of particles in the base material during the thermal stress of firing.

For the same reasons, activated carbon has the effect of preventing also the escape of gas or water vapor from inside the molded composite material, i.e. during thermal stresses after extraction from the mold.

A preferred formulation for the composite material according to the invention is:
base material + active carbon,
wherein the active carbon is a percentage of the total weight ranging from 3% to 60% by weight, more specifically from 10% to 50% by weight.

These preferred values derive from experimental tests, and the percentages vary in the mentioned ranges depending on the particle composition of the base material. As a criterion for mixing, the more the % of expanded particles increases, the more the % of activated carbon must be increased.

In addition to the advantage of gas absorption, activated carbon surprisingly inhibits the flammability of the final piece, equating to the addition of a mineral filler. The activated carbon burns at much higher temperatures than the composite material's and flame spread does not trigger. Therefore, the activated carbon not only acts as a flame-retardant component, but also gives the final piece self-extinguishing properties when its % is about or higher than 40% with respect to the total weight of the composite material according to the invention.

An aspect of the invention concerns the production of an internal spindle or core of a carbon-coated object. The inner spindle or core is molded or produced with a material as defined above, and then coated with one or more layers of carbon. The inner spindle or core thus coated is placed in a mold and brought to a temperature that makes the carbon solidify.

An aspect of the invention concerns a padding, in particular of a helmet, or in general shock-absorbing paddings produced by molding with the composite material.

An aspect of the invention concerns a helmet comprising an inner padding produced by molding with the composite material.

An aspect of the invention concerns a method to mold an object comprising a core made of composite material and a rigid carbon outer shell made of carbon, with the steps of
lining the walls of a mold cavity with portions of carbon,
laying a quantity of the composite material in the mold;
closing the mold, and heating the material to a temperature between 100 and 190 °C for about 20 to 200 minutes to make the material expand so that it pushes the carbon against the walls of the cavity to copy the shape thereof;
extracting the object thus molded from the mold.

An example of a hot molding cycle (firing) for an object made of composite material according to the invention is the following:
1. the base material is mixed in said proportions with activated carbon to obtain the molding core;
2. a quantity of composite material and the molding core is laid in a mold;
3. once the mold is closed, the material is brought to about 140 °C for about 5 minutes (5 minutes is the minimum time for maximum productivity reasons but it is not binding);
4. the composite material solidifies;
5. the molded object is let to cool down before removing it from the mold.

## Claims

1. Material for hot molding of objects, composed of a base material and an additive material,
**characterized in that**
the base material is composed of 5 to 50% by weight of expanded particles and 50 to 95% by weight of unexpanded particles, the particles being made out of plastic material, of closed shape, hollow and filled with gas; and
the additive material is activated carbon.

2. Material according to claim 1, wherein the activated carbon is a percentage of the total weight of the material ranging from 3% to 60% by weight.

3. Material according to claim 2, wherein the activated carbon is a percentage of the total weight of the material ranging from 10% to 50% by weight.

4. Material according to claim 3, wherein the activated carbon is a percentage of the total weight of the material greater than or equal to 40% by weight.

5. Spindle or inner core of a carbon-coated object molded or produced with a material as defined in one of the preceding claims, and then coated with one or more layers of carbon.

6. Padding, in particular of helmet, or in general cushion for absorbing impacts, produced by molding the - or with the - material as defined in one of the previous claims 1 to 4.

7. Helmet comprising an internal padding produced by molding the material as defined in one of the previous claims 1 to 4.

8. Method for molding an object comprising a core made out of composite material and a rigid outer shell made out of carbon, with the steps of
lining the walls of a mold cavity with carbon portions,
laying in the mold a quantity of the material according to any previous claim 1 to 4; closing the mold, and heating the material to a temperature between 100 and 190 °C for a time of between 20 and 200 minutes to expand the material so that it pushes the carbon against the walls of the cavity to copy the shape thereof;
removing the object thus molded from the mold.

## Patentansprüche

1. Material für die Heißformung von Gegenständen, bestehend aus einem Grundmaterial und einem Zusatzmaterial,
**dadurch gekennzeichnet, dass**
das Basismaterial aus 5 bis 50 Gew.-% expandierten Teilchen und 50 bis 95 Gew.-% nicht expandierten Teilchen besteht,
wobei die Teilchen aus Kunststoffmaterial bestehen, eine geschlossene Form aufweisen, hohl und mit Gas gefüllt sind; und das Zusatzmaterial Aktivkohle ist.

2. Material nach Anspruch 1, wobei die Aktivkohle einen Prozentsatz des Gesamtgewichts des Materials von 3 bis 60 Gew.-% ausmacht.

3. Material nach Anspruch 2, wobei der prozentuale Anteil der Aktivkohle am Gesamtgewicht des Materials im Bereich von 10 bis 50 Gew.-% liegt.

4. Material nach Anspruch 3, wobei der prozentuale Anteil der Aktivkohle am Gesamtgewicht des Materials größer als oder gleich 40 Gew.-% ist.

5. Spindel oder innerer Kern eines kohlenstoffbeschichteten Gegenstands, der mit einem in einem der vorhergehenden Ansprüche definierten Material geformt oder hergestellt und dann mit einer oder mehreren Schichten Kohlenstoff beschichtet wurde.

6. Polsterung, insbesondere von Helmen oder allgemein von Kissen zur Absorption von Stößen, hergestellt durch Formen des - oder mit dem - Material, wie in einem der vorhergehenden Ansprüche 1 bis 4 definiert.

7. Helm mit einer Innenpolsterung, die durch Formen des in einem der vorhergehenden Ansprüche 1 bis 4 definierten Materials hergestellt ist.

8. Verfahren zum Formen eines Gegenstandes mit einem Kern aus Verbundmaterial und einer starren Außenschale aus Kohlenstoff, mit den Schritten
Auskleiden der Wände eines Formhohlraums mit Kohlenstoffteilen,
Einbringen einer Menge des Materials nach einem der vorhergehenden Ansprüche 1 bis 4 in die Form;
Schließen der Form und Erhitzen des Materials auf eine Temperatur zwischen 100 und 190 °C für eine Zeit zwischen 20 und 200 Minuten, um das Material zu expandieren, so dass es den Kohlenstoff gegen die Wände des Hohlraums drückt, um dessen Form zu kopieren;
Entnahme des so geformten Gegenstandes aus der Form.

## Revendications

1. Matériau pour le moulage à chaud d'objets, composé d'un matériau de base et
d'un matériau additif,
**caractérisé par le fait que**
le matériau de base est composé de 5 à 50 % en poids de particules expansées et de 50 à 95 % en poids de particules non expansées, les particules étant en matière
plastique, de forme fermée, creuses et remplies de gaz; et l'additif est du charbon actif.

2. Matériau selon la revendication 1, dans lequel le charbon actif représente un pourcentage du poids total du matériau allant de 3 % à 60 % en poids.

3. Matériau selon la revendication 2, dans lequel le charbon actif représente un pourcentage du poids total du matériau allant de 10 % à 50 % en poids.

4. Matériau selon la revendication 3, dans lequel le charbon actif représente un pourcentage du poids total du matériau supérieur ou égal à 40 % en poids.

5. Broche ou noyau interne d'un objet revêtu de carbone moulé ou produit avec un matériau tel que défini dans l'une des revendications précédentes, puis revêtu d'une ou plusieurs couches de carbone.

6. Rembourrage, notamment de casque, ou en général coussin d'absorption des chocs, réalisé par moulage du - ou avec le - matériau tel que défini dans l'une des revendications précédentes 1 à 4.

7. Casque comprenant un rembourrage interne réalisé par moulage du matériau tel que défini dans l'une des revendications précédentes 1 à 4.

8. Procédé de moulage d'un objet comprenant un noyau en matériau composite et une coque extérieure rigide en carbone, comprenant à
tapisser les parois d'une cavité du moule avec des portions de carbone,
déposer dans le moule une quantité de matériau selon l'une quelconque des revendications précédentes 1 à 4;
fermer le moule, et chauffer le matériau à une température comprise entre 100 et 190 °C pendant une durée comprise entre 20 et 200 minutes pour dilater le matériau afin qu'il pousse le carbone contre les parois o de la cavité pour en épouser la forme;
démouler l'objet ainsi moulé.
